Europäisches Patentamt

European Patent Office

Office européen des brevets

(19)

(11) **EP 1 555 805 A2**

(12) **EUROPEAN PATENT APPLICATION**

(43) Date of publication:
**20.07.2005 Bulletin 2005/29**

(51) Int Cl.$^7$: **H04N 1/52**

(21) Application number: **05075691.5**

(22) Date of filing: **26.02.2002**

(84) Designated Contracting States:
**AT BE CH CY DE DK ES FI FR GB GR IE IT LI LU MC NL PT SE TR**

(30) Priority: **02.03.2001 NL 1017480**

(62) Document number(s) of the earlier application(s) in accordance with Art. 76 EPC:
**02712537.6 / 1 364 524**

(71) Applicant: **M.Y. Printech B.V.**
**4631 SZ Hoogerheide (NL)**

(72) Inventor: **Alderliefste, Martin**
**4631 GJ Hoogerheide (NL)**

(74) Representative: **Tabeling, Marcella M.J.**
**Arnold & Siedsma,**
**Sweelinckplein 1**
**2517 GK The Hague (NL)**

Remarks:
This application was filed on 23 - 03 - 2005 as a divisional application to the application mentioned under INID code 62.

(54) **Method for printing a colour image**

(57) The invention relates to a method for printing a colour image comprising several non-photographic elements, such as text, logo or a colour background, using different colours, wherein these non-photographic elements are printed using colours from a first group composed of two special colours Orange and either Blue or Green, wherein for the colour Orange a colour is chosen with a colour definition according to CIElab of 59.00 55.53 82.16 and a colour tolerance of $< \Delta E$ 6.0, wherein for the colour Blue a colour is chosen with a colour definition according to CIElab of 28.61 19.13 -61.54 and a colour tolerance of $< \Delta E$ 6.0, and wherein for the colour Green a colour is chosen with a colour definition according to CIElab of 63.99 -64.20 35.86 and a colour tolerance of $< \Delta E$ 6.0.

FIG. 1

EP 1 555 805 A2

## Description

The present invention relates to a method for printing a colour image according to the preamble of claim 1.

The invention relates particularly to the printing of colour images, which are reproduced from originals when printing onto a material or substrate, for example on packaging of foodstuffs. The principle is based on the colours present in the originals being separated during reproduction into three primary colours (Cyan, Magenta and Yellow) and bringing these colours together again during printing. The inks with which the conventional full colour printing takes place are not ideal and, despite modern production methods, have the following shortcomings. They have too little brightness, they show too little saturation, and variation of the reproduction of colours takes place during the printing process. Because of these and other shortcomings amongst others, Black is added to the three primary colours.

In addition to photographic images, additional elements such as texts, logos and colour backgrounds are important for example on printed packaging. These elements are usually composed of bright colours with a high colour intensity. The primary printing colours do not have this colour range, while the brightness decreases sharply when the primary printing colours are mixed, a reason why special pigmented inks have been developed. A large ink stockroom is therefore necessary to enable printing according to the conventional method. Furthermore, between the printing of different colour images, the printing units must be cleaned and the printing plates of the press must be changed each time.

The object of the present invention is to improve the efficiency of the printing process as well as to optimize it.

The method according to the invention is defined in claim 1. It appears that with a combination of three special colours, i.e. orange, blue and green, at the most, almost all kinds of existing non-photographic elements can be reproduced.

When the colour image thereby comprises photographic elements only the colours of a second group of colours composed of the three primary colours Cyan, Magenta and Yellow supplemented with black is used to print these elements. With four basic printing colours Cyan, Magenta, Yellow and Black and two special colours Orange and either Blue or Green, any original image can be printed in a reproduction which is correct at least to the eye. In photographic images, the colour gamut with Cyan, Magenta, Yellow and Black is generally accepted, so that in the printing of the photographic images these basic printing colours can suffice. For additional elements, colours in the orange and blue-violet spectrum are difficult to reproduce and so two of the three special colours in the first group are used.

Otherwise it is noted from publication US 5,734,800 a six-colour printing system designated with the name Hexachrome is known, which uses six specially pigmented inks Cyan, Magenta, Yellow, Black, Orange and Green. Both photographic images and additional elements are printed using inks with these six colours. Hexachrome was specially developed to give the graphic designer a wider range of possibilities and to reduce the shortcomings of the printing process and printing inks. The correction of the low colour purity by using secondary colours and higher pigmentation of the inks gives a non-photographic effect with exaggerated colours in reproduced images, which is often perceived as unattractive.

According to a preferred method of the invention the colours from the first group are supplemented with one or more colours from the second group in the printing of additional elements. This enables a wider colour gamut for additional elements to be obtained.

In addition, the colours are preferably printed with a stochastic screen in order to reduce colour variation in a print run and to prevent interference from screen lines, which effect can occur in conventional screening.

During printing the colour sequence Black, Cyan, Magenta, Yellow, Blue or Green and finally Orange is preferred, such that dust on the material being printed has as little influence as possible on the final result.

The colour image to be printed is reproduced by scanning an original and subsequently forming a digital file, which comprises positioned reproduction values per colour. This is essentially a standard reproduction technique that is used. According to the invention, since only the photographic images are composed of the primary colours supplemented with black from the second group, only these image elements need to be reproduced. The special colours from the first group are only utilized for the additional elements. The digital file is supplemented with relevant information about additional elements in the colour image to be printed.

It is generally the case that the finer the screen, the higher the distortion during printing. Stochastic screening is so fine that great deviations begin to play a part. In order to obviate these deviations in the printed result, a correction takes place during conversion of the reproduction values in file to the plate reproduction values on printing plate. The stochastic reproduction can hereby be reduced to the level of a conventional screened reproduction.

Tests have shown that the correction can be substantially described with the following formula:

$$y = -100 \cdot (10^{1/a \cdot \log (1-x/100)} - 1)$$

wherein

x = reproduction value in file (in %)
y = corrected value (in %)
a = factor dependent on colour and screen spacing.

In the correction of a grey value formed by a combination of the colours from the second group and a screen spacing of 20 μm, the above stated factor "a" amounts to about 1.8. The correction for the colours Cyan, Magenta, Yellow and Black can be described using the same formula.

The correction can be applied to the reproduction values in file, although this preferably takes place in the stage of plate exposing so existing files do not have to be changed.

After having analysed many hundreds of originals, it has been found that the colours Orange, Blue and Green with a colour definition according to CIElab of:

| 59.00 | 55.53 | 82.16 for Orange, |
|---|---|---|
| 28.61 | 19.13 | -61.54 for Blue, |
| 63.99 | -64.20 | 35.86 for Green |

and a colour tolerance of < ΔE 6.0 forming the colours of the first group, give a colour image printed of an arbitrary original which is correct at least to the eye. These special colours are only used for the additional elements.

Finally, the invention also relates to a colour medium for applying in the method. This colour medium comprises a special orange, green or blue pigment with colour definitions as given above. The colour medium can be an ink, a toner, a colour foil for use in for example (digital) proofing systems, or any other substance that is deposited onto a material or substrate to reproduce colour images.

The invention will be further elucidated with reference to the annexed drawings. In the drawings:

Figure 1 shows a graph in which colour variation is plotted against screen percentage,
Figure 2 shows a graph in which colour variation is plotted against colour composition,
Figure 3 shows a graph in which colour variation is plotted against colour difference when cardboard is the printed material,
Figure 4 shows a table with screen percentages for a grey value printed with conventional and stochastic screening, and the associated difference,
Figure 5 shows a graph in which plate reproduction curves for a grey value printed with a stochastic screen and a conventional screen are plotted, and
Figure 6 shows a graph in which a correction curve for a grey value is shown.

For the printing of for example packaging made of cardboard, designs are drafted which are constructed from photographic elements and additional elements, such as text to provide information about the product packed or a logo to indicate the origin of the product. To enable printing of such a design a digital file is formed in generally known manner by reproduction of the original. Per colour a printing plate is then manufactured with digital plate exposure using a stochastic screen. The printing plates are set in the printing press in a pre-determined colour sequence and the packaging can be printed.

According to the invention photographic elements of the originals are scanned and separated into the three primary colours Cyan, Magenta and Yellow supplemented with Black, while information about a special Orange and a special Blue or a special Green for printing of the additional elements is added to the scanned information in the digital file. The basic printing colours Cyan, Magenta, Yellow and Black cause the fewest variations of tone value during printing, so that photographic elements are only printed in these colours and the reproduction obtained is as natural as possible. This is not the case for additional elements, since these elements are usually composed of bright colours with a high colour intensity. The primary colours Cyan, Magenta and Yellow supplemented with Black cannot provide the required colour gamut, so that a special colour Orange and a special colour Blue or Green are applied to print additional elements. The main advantage obtained with the invention is that for printing of an arbitrary design a group of seven printing inks, from which a maximum of six are chosen, can suffice.

Printing takes place on a usual six-colour press, on which a fixed colour sequence can be employed as a result of a limited ink stockroom of seven colours. For some designs, only the printing plates for the special colour Blue must be exchanged for a printing plate for the special colour Green, and vice versa. Therefore the time for cleaning the printing units of the printing press can be considerably reduced. For each design a maximum of six printing plates and six printing units are necessary, whereas the printing units do not require cleaning when the design is changed since the same colour sequence and the same colours are used. Also the ink stockroom needs only seven different inks, while previously for instance in case of four different designs each printed in six colours, a total of 12 till 24 different inks were required.

After analysis of many designs it has been found that with the special colours mentioned below any design can be printed in a reproduction which is correct at least to the eye. A colour Orange with a colour definition according to CIElab of 59.00 55.53 82.16, a colour Blue with a colour definition according to CIElab of 28.61 19.13 -61.54 and a colour Green with a colour definition according to CIElab of 63.99 -64.20 35.86, measured with Techkon SP830 lambda D65 10° without varnish or lacquer, within a colour tolerance of < ΔE 6.0

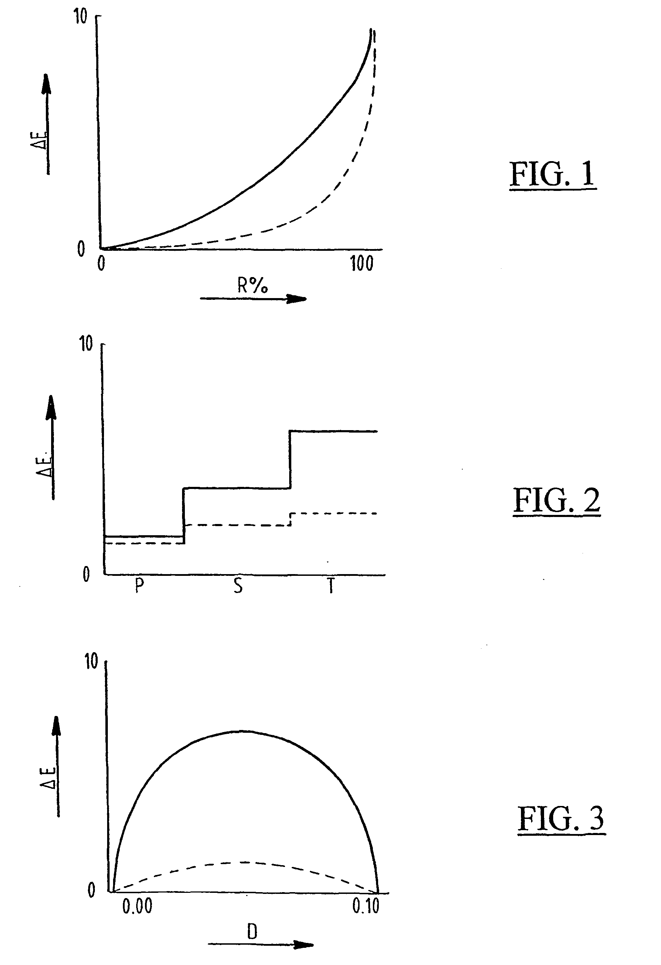

Figures 1-3 show colour variation in an average print run successively at increasing screen percentage (fig. 1), differences in colour composition (fig. 2) and colour differences in cardboard as printed material (fig. 3). In all figures the colour difference (ΔE) is plotted along the y-axis. Along the x-axis is plotted in fig. 1 the screen percentage (R), in fig. 2 the number of colours mixed (Primary, Secondary and Tertiary) and in fig. 3 the printing density (D). The colour variation is shown both for printing with a conventional screen (full line) and with a stochastic screen (dotted line). It can be clearly seen from fig. 1-3 that with the application of a stochastic screen a reduction in the colour variation in the print run can be obtained. However it has been found that the use of a stochastic screen results in a reproduction differing from the original.

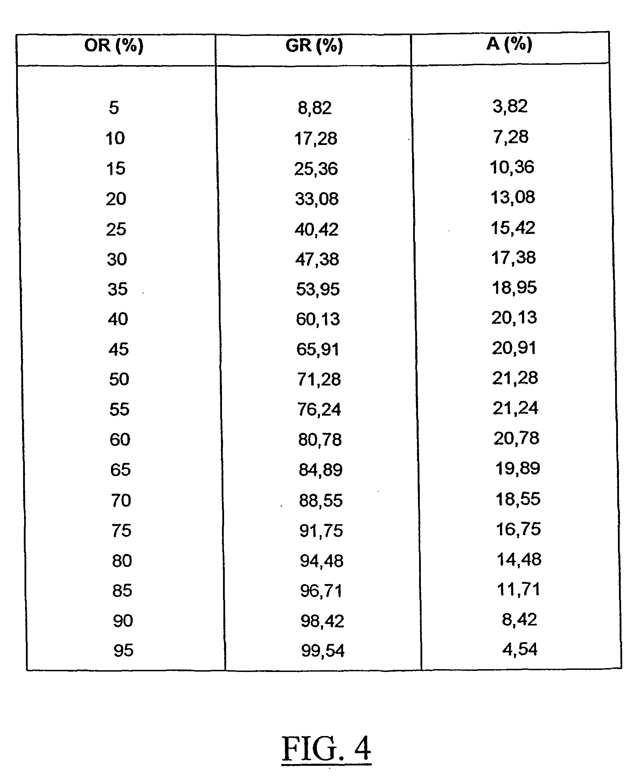

Below will be elucidated the manner in which a correction curve was determined so as to obtain a correct reproduction of the original, which curve will be used in the conversion of values in file to values on printing plate. The original was formed by a printed series of grey values with a (conventional) screen of 5 to 100% increasing in steps of 5%. The file was formed by said grey values. The printing plates were exposed using the digital file. The reproduced original was printed with a stochastic screen. The screen percentages of the reproduction were compared with the screen percentages of the original. The table of Figure 4 contains the original screen percentages (OR), the reproduced screen percentages (GR) and the difference (A) due to the use of a stochastic screen.

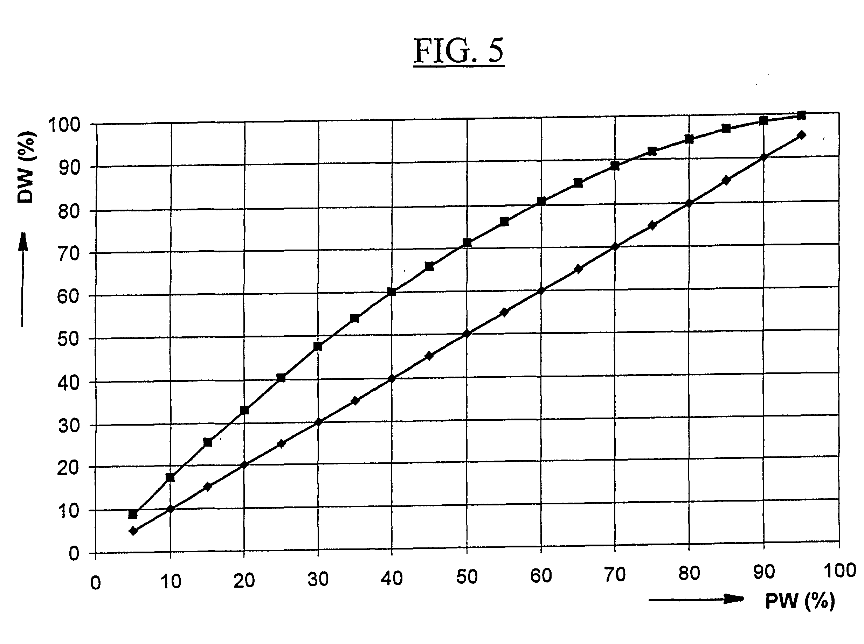

The values in the table of Figure 4 form plate reproduction curves for a grey value printed respectively with a stochastic screen and a conventional screen, which grey value is a combination of the four basic colours Cyan, Magenta, Yellow and Black. The values are plotted in the graph of Figure 5. Plotted along the y-axis is the printing reproduction value (DW) and along the x-axis the plate reproduction value (PW). In addition, the squares represent the stochastic values and the diamonds represent the conventional values. It can be clearly seen that, compared to a conventional screening, a stochastic screening displays considerable differences in the reproduced images. In order to match the stochastic reproduction of images with the conventional reproduction thereof, a correction will have to take place in the conversion of reproduction values in digital file to plate reproduction values on printing plate. This correction has been ascertained by tests and can be described with the following formula:

$$y = -100 \cdot (10^{1/a \cdot \log (1-x/100)} - 1)$$

wherein

x = reproduction value in file (in %)
y = corrected value (in %)
a = 1.8.

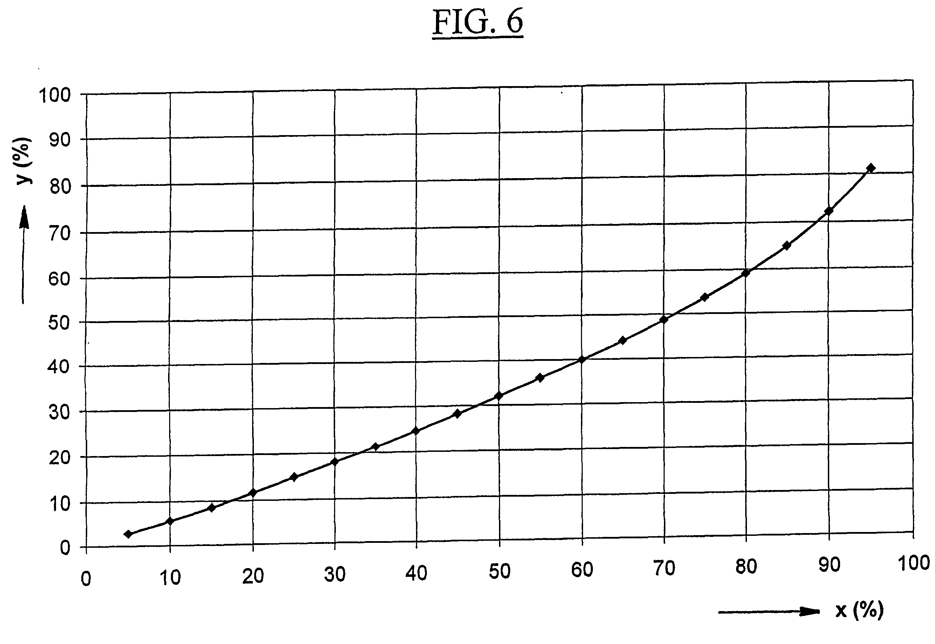

The factor "a" depends on colour and screen spacing. The above formula is displayed graphically in Figure 6.

The correction is preferably applied in the stage of exposing printing plates. The corrected value "y" in that case represents a plate reproduction value on printing plate. Another possibility is to correct the reproduction values in file themselves, wherein "y" represents a corrected reproduction value. This option is less recommended since existing digital files will then have to be modified.

A correction should actually take place per printing plate, i.e. per colour. It has however been found that with above given formula a result sufficient for the eye is possible if the colours Cyan, Magenta, Yellow and Black, plus special Orange and either special Blue or special Green are corrected with this formula.

In order to obtain an improvement of the printed result, the ink preferably contains UV-resistant and dispersion varnish-resistant additives.

According to the invention any design can be printed using four basic colours, i.e. Cyan, Magenta, Yellow and Black for photographic images and, in addition, two special colours, i.e. Orange and either Blue or Green for additional elements. Furthermore, printing preferably takes place using a stochastic screen in order to reduce colour variation in the print run and to prevent interference. After a correction has been applied practically the same reproduction will be obtained as when printing is carried out with a conventional screen.

**Claims**

1. Method for printing a colour image comprising several non-photographic elements, such as text, logo or a colour background, using different colours, **characterized in that** these non-photographic elements are printed using colours from a first group composed of two special colours Orange and either Blue or Green, wherein for the colour Orange a colour is chosen with a colour definition according to CIElab of 59.00 55.53 82.16 and a colour tolerance of < ∆E 6.0, wherein for the colour Blue a colour is chosen with a colour definition according to CIElab of 28.61 19.13 -61.54 and a colour tolerance of < ∆E 6.0, and wherein for the colour Green a colour is chosen with a colour definition according to CIElab of 63.99 -64.20 35.86 and a colour tolerance of < ∆E 6.0.

2. Method according to claim 1, wherein the colour image further comprises a photographic image and whereby this photographic image is printed using colours only from a second group composed of the three primary colours Cyan, Magenta and Yellow supplemented with Black.

3. Method according to claim 2, wherein different colours of ink are used for printing a colour image, wherein the non-photographic elements of the colour image are printed using inks with colours from the first group and wherein the photographic image is printed using inks with colours only from the second group.

4. Method as claimed in claim 1 or 2, wherein the colours from the first group are supplemented with one or more colours from the second group in the printing of the non-photographic elements.

5. Method as claimed in one of the preceding claims, wherein the colours are printed with a stochastic screen.

6. Method as claimed in one of the preceding claims, wherein during printing the colour sequence is Black, Cyan, Magenta, Yellow, Blue or Green and finally Orange.

7. Method as claimed in one of the preceding claims, wherein the colour image to be printed is reproduced from an original by scanning this latter and subsequently forming a digital file, which comprises positioned reproduction values per colour.

8. Method as claimed in claim 7, wherein a correction takes place during the conversion of reproduction values in digital file to plate reproduction values on printing plate for obtaining a reproduction which is at least correct to the eye.

9. Method as claimed in claim 8, wherein the correction is substantially described with the following formula:

$$y = -100 \cdot (10^{1/a \cdot \log (1-x/100)} - 1)$$

wherein

x = reproduction value in file (in %)
y = corrected value (in %)
a = factor dependent on colour and screen spacing.

10. Method as claimed in claim 9, wherein the factor "a" amounts to about 1.8 for the correction of a grey value formed by a combination of the colours from the second group and a screen spacing of 20 μm.

11. Method as claimed in one of the claims 8-10, wherein the correction takes place in the exposure of the printing plates.

12. A set of colour media to be deposited onto a material or substrate for reproduction of a colour image comprising several non-photographic elements, such as text, logo or a colour background, said set of colour media comprising at least:

- a colour medium comprising an orange pigment for the purpose of obtaining the colour Orange with a colour definition according to CIElab of 59.00 55.53 82.16 and a colour tolerance of < ΔE 6.0 and either
- a colour medium comprising a blue pigment for the purpose of obtaining the colour Blue with a colour definition according to CIElab of 28.61 19.13 -61.54 and a colour tolerance of < ΔE 6.0 or
- a colour medium comprising a green pigment for the purpose of obtaining the colour Green with a colour definition according to CIElab of 63.99 -64.20 35.86 and a colour tolerance of < ΔE 6.0.

13. The set of claim 12, further comprising one or more of the following:

- a colour medium comprising a primary Cyan colour pigment,
- a colour medium comprising a primary Magenta colour pigment,
- a colour medium comprising a primary Yellow colour pigment, and
- a colour medium comprising a Black colour pigment.

14. The set of colour media according to claim 12 or 13, wherein the colour medium is an ink.

15. The set of colour media according to claim 12 or 13, wherein the colour medium is a toner.

16. The set of colour media according to claim 12 or 13, wherein the colour medium is a colour foil.

FIG. 1

FIG. 2

FIG. 3

| OR (%) | GR (%) | A (%) |
|--------|--------|-------|
| 5 | 8,82 | 3,82 |
| 10 | 17,28 | 7,28 |
| 15 | 25,36 | 10,36 |
| 20 | 33,08 | 13,08 |
| 25 | 40,42 | 15,42 |
| 30 | 47,38 | 17,38 |
| 35 | 53,95 | 18,95 |
| 40 | 60,13 | 20,13 |
| 45 | 65,91 | 20,91 |
| 50 | 71,28 | 21,28 |
| 55 | 76,24 | 21,24 |
| 60 | 80,78 | 20,78 |
| 65 | 84,89 | 19,89 |
| 70 | 88,55 | 18,55 |
| 75 | 91,75 | 16,75 |
| 80 | 94,48 | 14,48 |
| 85 | 96,71 | 11,71 |
| 90 | 98,42 | 8,42 |
| 95 | 99,54 | 4,54 |

FIG. 4

## FIG. 5

EP 1 555 805 A2

FIG. 6